# EUROPEAN PATENT APPLICATION

(11) **EP 3 165 853 A1**
(43) Date of publication of application: **10.05.2017**
(21) Application number: 16197099.1
(22) Date of filing: 03.11.2016
(51) Int. Cl.: F25C 5/08

(54) **ICE MACHINE AND REFRIGERATOR HAVING THE SAME**

(30) Priority: 04.11.2015 KR 20150154440
(71) Applicant: Samsung Electronics Co., Ltd., Gyeonggi-do 16677 (KR)
(72) Inventor: Je, Sang Ky, Gyeonggi-do (KR); Son, Seok-Jun, Gyeonggi-do (KR)
(74) Representative: Hewett, Jonathan Michael Richard

(57) **Abstract**

A refrigerator (1) including an ice maker tray (110) where ice is formed and an ice removal heater arranged on the outer side of the ice maker tray (110) for melting a side of the ice. The ice maker tray (110) include an ice removal heater seat for settling the ice removal heater (200) on the outer side of the ice maker tray (110), and the ice removal heater (200) comprises a plurality of longitudinal portions (230) formed in a direction corresponding to the longitudinal direction of the ice maker tray (110), and a plurality of bending portions (240) arranged between the plurality of longitudinal portions (230). The ice maker (100) and refrigerator (1) having the same, which includes an ice removal heater (200) to increase heat transfer efficiency for the ice maker (100) while reducing power consumption of the ice removal heater (200).

## Description

The present invention relates to an ice maker and refrigerator having the same, and more particularly to removing ice from the ice maker.

Ice makers are devices to form ice and make it readily available to the user, and may be mainly equipped in a device that keeps a certain temperature to form the ice, such as the refrigerator.

The refrigerator is a home appliance having storerooms for storing food and groceries and a cold air supply device for supplying cold air to the storerooms, thereby keeping the food and groceries fresh. The storeroom may be arranged inside the main body of the refrigerator with an open front, and the open front may be opened or closed by a door.

The refrigerator may include an ice maker for forming ice, an ice bucket for storing the ice formed by the ice maker, a transfer member for transferring the ice from the ice bucket, a driving motor for driving the transfer member, a grinder for grinding the ice in the ice bucket, etc.

The ice formed by the ice maker is removed from the ice maker by an ejector and transferred to the ice bucket, in which case, to facilitate the ice removal, there may be an ice removal heater arranged in the ice maker for removing part of the ice bordering on a side of the ice maker by heating the side of the ice maker.

A conventional ice maker uses an aluminum pipe heater for the ice removal heater, but the aluminum pipe has high power consumption and poor heat transfer performance due to thick insulation, and has a small area coming into contact with the ice maker because of difficultly in bending process, leading to a drop in performance of heat transfer to the ice maker.

Embodiments of the present invention provide an ice maker and refrigerator having the same, which includes an ice removal heater to increase heat transfer efficiency for the ice maker while reducing power consumption of the ice removal heater.

In accordance with one aspect of the present invention, a refrigerator includes an ice maker tray where ice is formed and an ice removal heater arranged on the outer side of the ice maker tray for melting a side of the ice.

The ice maker tray may include an ice removal heater seat for settling the ice removal heater on the outer side of the ice maker tray, and the ice removal heater comprises a plurality of longitudinal portions formed in a direction corresponding to the longitudinal direction of the ice maker tray, and a plurality of bending portions arranged between the plurality of longitudinal portions.

At least a part of the ice removal heater may be formed with a cord heater.

Three quarters of an outer circumferential surface of the ice removal heater may come into contact with the ice removal heater seat.

The plurality of longitudinal portions may be three or more in number, and the plurality of bending portions are two or more in number.

The ice removal heater seat may include a seating projection protruding outward from the ice maker tray and a seating groove sunken down from the seating projection.

The seating groove may have width corresponding to diameter of an outer circumferential surface of the ice removal heater in order for the ice removal heater to be tightly settled in the seating groove.

The seating groove may come into contact with three quarters of an outer circumferential surface of the ice removal heater.

The entire area of the plurality of longitudinal portions and bending portions may be settled in the ice removing heater seat.

At least a portion of the bending portions may be shaped like an arc, the arc having curvature radius of about 8mm or less.

The refrigerator may further include a supporting member for supporting one side of the ice removal heater.

The supporting member may include a supporter having a form that corresponds to the ice removal heater seat.

The supporter may support one side of the ice removal heater that is not in contact with the ice removal heater seat.

The ice removal heater may include a heating wire, a first heat-resistant part covering the heating wire, and a second heat-resistant part covering the first heat-resistant part.

The first heat-resistant part may have higher heat-resistant performance than the second heat-resistant part.

In accordance with one aspect of the present disclosure, a refrigerator may include an ice maker tray opened upward where ice is formed and an ice removal heater settled under the ice maker tray for melting a side of the ice having a heating wire, a first heat-resistant part covering the heating wire and a second heat-resistant part covering the first heat-resistant part.

The first heat-resistant part may have higher heat-resistant performance than the second heat-resistant part.

The ice maker tray may include an ice maker space where ice is formed, and a heated area located under the ice maker space for transferring heat generated from the ice removal heater.

The ice removal heater may be arranged on the outer side of the heater area.

The ice removal heater may include a plurality of longitudinal portions extending in a direction corresponding to the longitudinal direction of the heated area and a plurality of bending portions connecting the plurality of longitudinal portions.

A same number of longitudinal portions of the plurality of longitudinal portions may be arranged on either side from a center line of the heated area.

The ice maker tray may further includes an ice removal heater seat for settling the ice removal heater on the outer side of the heated area configured to three quarters or more of an outer circumferential surface of the ice removal heater come into contact with the outer side of the heated area.

In accordance with one aspect of the present invention, an ice maker may include an ice maker tray where ice is formed and an ice removal heater including a cord heater arranged on an outer side of the ice maker tray for melting a side of the ice.

The ice maker tray may include an ice maker space where the ice is formed and an ice removal heater seat for settling the ice removal heater on the outer side of the ice maker tray.

The ice removal heater may include a plurality of longitudinal portions formed in a direction corresponding to the longitudinal direction of the ice maker tray, and a plurality of bending portions arranged between the plurality of longitudinal portions, and

An outer circumferential surface of the ice maker tray may come into contact with the plurality of longitudinal portions and bending portions to transfer heat to the ice maker space.

The above and other objects, features and advantages of the present invention will become more apparent to those of ordinary skill in the art by describing in detail exemplary embodiments thereof with reference to the accompanying drawings, in which:
FIG. 1 is a perspective view of the refrigerator in accordance with one embodiment of the present invention;
FIG. 2 is a cross-sectional view of the door of the refrigerator in accordance with one embodiment of the present invention;
FIG. 3 is an exploded perspective view of the ice maker of the refrigerator in accordance with one embodiment of the present invention;
FIG. 4 is a perspective view of the ice maker tray of the refrigerator in accordance with one embodiment of the present invention;
FIG. 5 is a perspective view of a state in which the ice maker tray of the refrigerator is coupled with the ejector in accordance with one embodiment of the present invention;
FIG. 6 is a cross-sectional view of the ice maker of the refrigerator in accordance with one embodiment of the present invention;
FIG. 7 is a cross-sectional view of the ice maker tray and ejector of the refrigerator in accordance with one embodiment of the present invention;
FIG. 8 is an exploded perspective view of a part of the ice maker of the refrigerator in accordance with one embodiment of the present invention;
FIG. 9 is a view illustrating an inner portion of the ice removal heater in accordance with one embodiment of the present invention;
FIG. 10 is a bottom view exploded perspective view of the ice maker tray of the refrigerator in accordance with one embodiment of the present invention;
FIG. 11 is a top view exploded perspective view of the support member of the refrigerator in accordance with one embodiment of the present invention;
FIG. 12 is a cross-sectional view of a part of the ice maker of the refrigerator in accordance with one embodiment of the present invention;
FIG. 13 is a perspective view of a bottom of the ice maker tray of the refrigerator in accordance with other embodiment of the present invention.

Embodiments and features as described and illustrated in the present disclosure are only preferred examples, and various modifications thereof may also fall within the scope of the invention.

Throughout the drawings, like reference numerals refer to like parts or components.

An ice maker in accordance with an embodiment of the present invention may be adopted in any device that is able to form ice. For example, it may be equipped in a device that is able to keep a certain temperature to form ice, such as a freezer.

An ice maker and refrigerator, for example, having the ice maker will be explained in the following description.

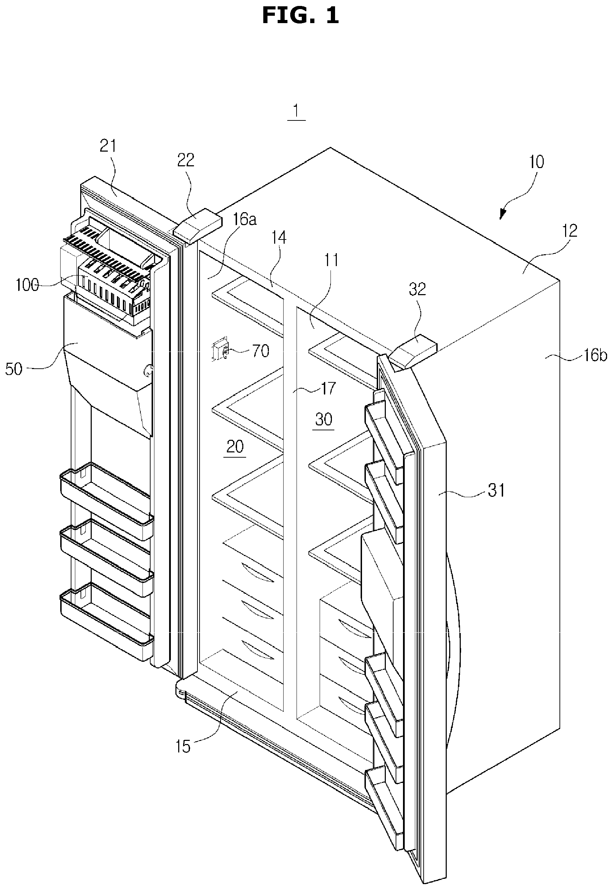

The terms 'forward', 'front', 'behind', 'rear or back', 'up', and 'down' are used based on the front of a refrigerator as shown in FIG. 1, i.e., based on a side of the refrigerator facing forward.

FIG. 1 is a perspective view of a refrigerator, according to an embodiment of the present invention.

Referring to FIG. 1, a refrigerator 1 in accordance with an embodiment of the present invention may include a main body 10, storerooms 20, 30 formed inside the main body 10, and a cold air supply device (not shown) for supplying cold air into the storerooms 20, 30.

The main body 10 may include an inner case 11 (see FIG. 1) that forms the storerooms 20,30, an outer case 12 (also see FIG. 1) combined on the outer side of the inner case 11, and an insulation (not shown) arranged between the inner case 11 and the outer case 12.

The inner case 11 may be formed by injection molding of a resin substance, and the outer case 12 may be formed of a metal substance so as to give an aesthetic feeling and have durability. Foamed urethane may be used for the insulation, which may be formed between the inner case 11 and the outer case 12 by foaming and rigidifying an undiluted solution of urethane after the inner case 11 and the outer case 12 are combined together.

The main body 10 may be shaped like almost a box with the front open. The main body 10 may have a top wall 14, a bottom wall 15, two side walls 16a, 16b, a rear wall, and a middle wall 17. The middle wall 17 may partition the storerooms 20, 30 into a freezer room 20 on the left and a fridge room 30 on the right. The freezer room 20 may be kept at temperatures of about 18° below zero, and the fridge room 30 may be kept at temperatures of about 0° to 5°. The positions of the freezer and fridge rooms 20 and 30 are, however, not limited thereto, but may be changed.

A freezer door 21 may be pivotally combined with the main body 10 by a hinge 22 to open and close the open front of the freezer room 20, and a fridge door 31 may be pivotally combined with the main body 10 by a hinge 32 to open and close the open front of the fridge room 30.

An ice maker 100 for forming ice and an ice bucket 50 for containing the ice formed by the ice maker 100 may be arranged in the freezer door 21. The ice maker 100 may form ice with cold air of the freezer room 20. A process of transferring the ice formed by the ice maker 100 to the ice bucket 50 will be described later in detail.

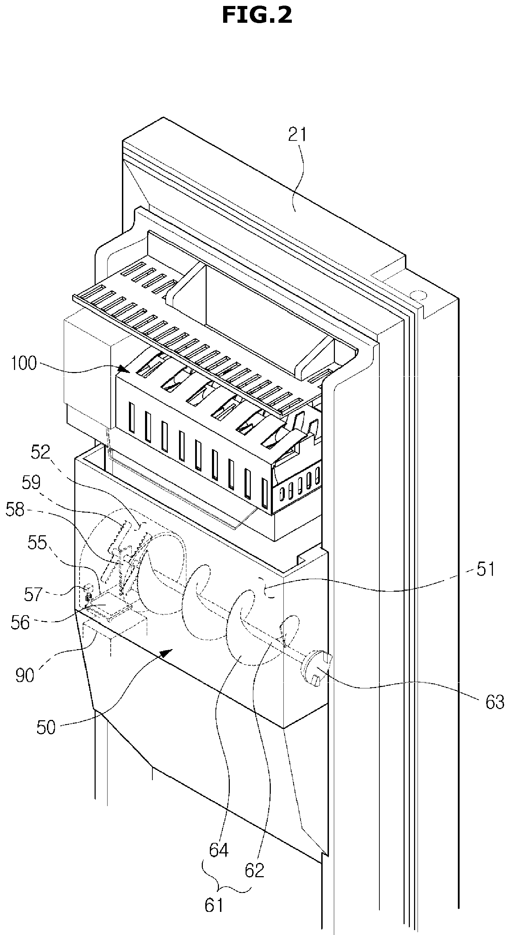

The ice bucket 50 is mounted in the freezer door 21 to be located below the ice maker 100. A transferring device 61, 63 (see FIG. 2) is arranged in the ice bucket 50 for transferring the stored ice, and a driver 70 is arranged in the main body 10 for driving the transferring device 61, 63. A structure of a refrigerator in accordance with embodiments of the present invention will now be described by focusing on the transferring device 61, 63 and the driver 70.

FIG. 2 is a perspective view of a door of the refrigerator of FIG. 1.

Referring to FIG. 2, the refrigerator 1 in accordance with an embodiment of the present invention may include the ice maker 100 for forming ice, the ice bucket 50 for storing the ice formed by the ice maker 100, the transferring device 61, 63 for transferring the ice stored in the ice bucket 50, and the driver 70 for driving the transferring device 61, 63.

The ice maker 100 may include an ice maker tray 110 for receiving water and forming ice, an ejector 150 for removing the ice from the ice maker tray 110, and a slider 170 for guiding the ice removed from the ice maker 100 to the ice bucket 50, which will be described later in detail.

The ice bucket 50 may have a storage space 51 for receiving the falling ice from the ice maker 100 and a grinding space 52 for grinding the ice. The storage space 51 and the grinding space 52 may be arranged in parallel to each other.

An outlet 55 for discharging the ice from the ice bucket 50 may be formed on or below the bottom of the grinding space 52. The outlet 55 may be connected to a chute 90 that guides the ice into a take-out space of a dispenser.

There may be a grinder arranged in the grinding space 52 for grinding ice. The grinder may be comprised of a fixed blade 58 fixed to the ice bucket 50, a rotating blade 59 attached to a rotation shaft 62 of the transfer member 61 and rotated with the transfer member 61, and a guide member 56 for supporting the ice for the fixed blade 58 and rotating blade 59 to be able to grind the ice and guiding the ground pieces of ice to the outlet 55.

The guide member 56 may be pivotally and hingedly combined with the outlet 55 in order to discharge the ice through the outlet 55 without grinding the ice, and the grinder may include a switch motor 57 to rotate the guide member 56.

Accordingly, with the configuration, the ice falling down from the ice maker 100 to the storage space 51 of the ice bucket 50 may be transferred to the grinding space 52 from the storage space 51 by the transferring device 61, 63, and may be ground into pieces or not be ground but discharged out of the ice bucket 50 through the outlet 55 formed on or below the bottom of the grinding space 52.

As such, the transferring device 61, 63 is to transfer ice, including a transfer member 61 and a driven coupler 63 for receiving driving force to rotate the transfer member 61.

The transfer member 61 may have the form of an auger with a rotation shaft 62 and a screw wing 64 formed in the radial direction from the rotation shaft 62.

The driven coupler 63 may extend from the rotation shaft 62 and may be combined with the driver 70 arranged on a side wall 16a of the main body for rotating the transfer member 61. Specifically, when the door 21 is closed, the driven coupler 63 and a driving coupler (not shown) arranged in the driver 70 are coupled for transferring turning force generated from the driver 70 to the transfer member 61.

The driver 70 and the driven coupler 63 are coupled together when the door 21 is closed, and decoupled from each other when the door 21 is opened. Accordingly, it is preferable that the driving coupler 73 and the driven coupler 63 may be made of resin substances to prevent damage from frequent coupling and decoupling.

The driver 70 may be located inside the freezer room 20 as in the present embodiment, without being limited thereto. For example, in another embodiment, the driver 70 may be located in the freezer door 21.

In this case, the driven coupler 63 may be coupled to the driver 70 arranged on the freezer door 21 by an extra configuration, and may receive turning force generated from the driver 70 and drive the transfer member 61.

Furthermore, the ice maker 100 is not limited to what is described above, but may be arranged not in the freezer door 21 but in the freezer room 20. In this case, the driven coupler 63 may be coupled with the driver 70 at all times for driving the transfer member 61.

Unlike the embodiment described above, even when the ice maker 100 is arranged inside of the freezer room 20, the ice maker tray 110 and the ice removal heater 200, which will be described later, may be equally applied.

The ice maker 100 and a process of forming ice in the ice maker 100 will now be described in detail.

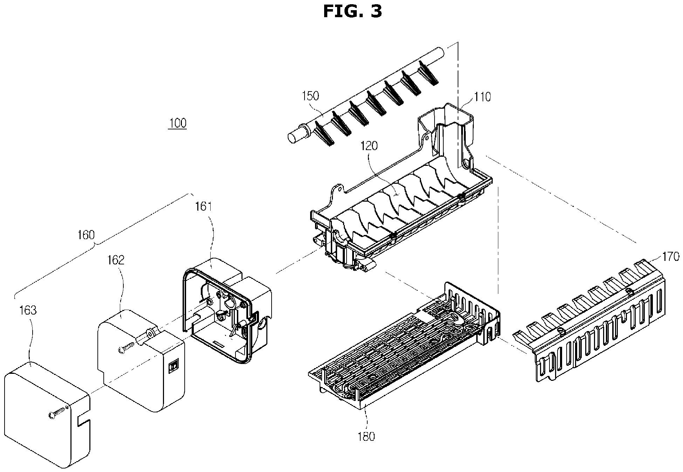

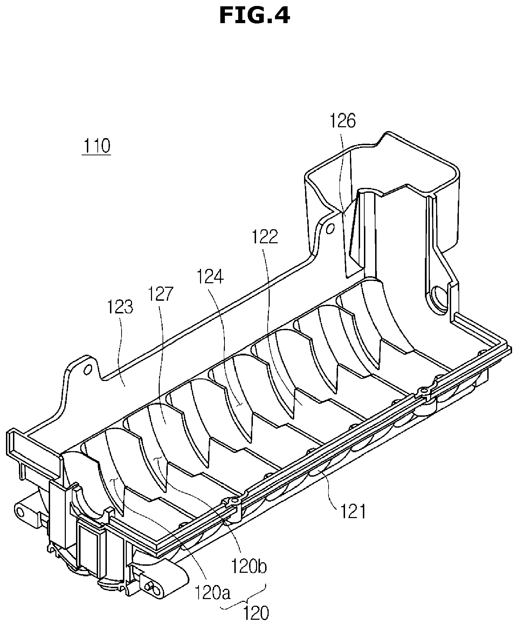

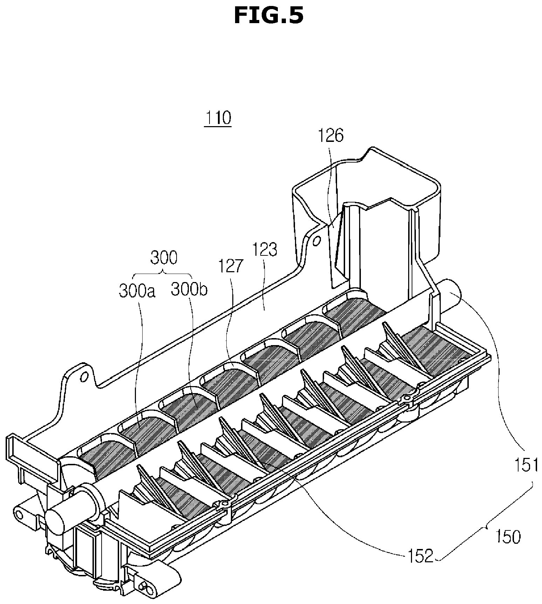

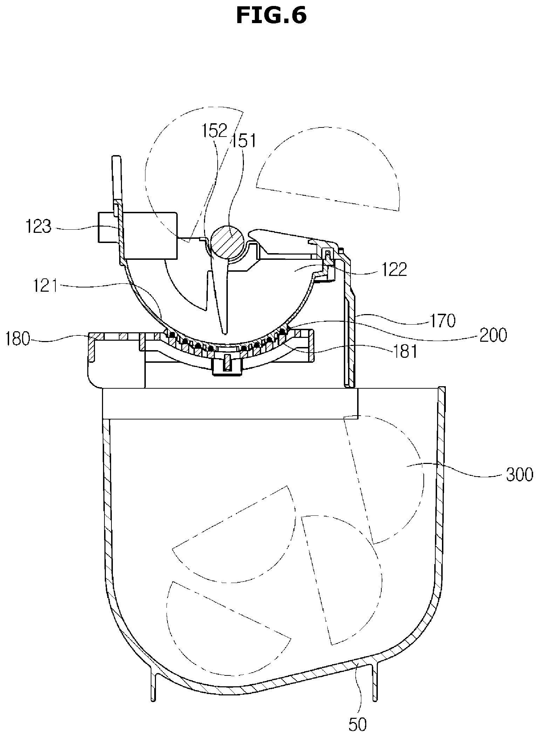

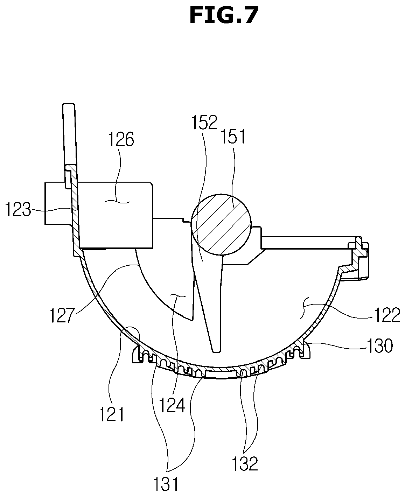

FIG. 3 is an exploded view of an ice maker of a refrigerator, according to an embodiment of the present invention, FIG. 4 is a perspective view of an ice maker tray of a refrigerator, according to an embodiment of the present invention, FIG. 5 is a perspective view of a combined ice maker tray and ejector of a refrigerator, according to an embodiment of the present invention, FIG. 6 is a cross-sectional view of an ice maker of a refrigerator, according to an embodiment of the present invention, and FIG. 7 is a cross-sectional view of an ice maker tray and ejector of a refrigerator, according to an embodiment of the present invention.

The ice maker 100 may include the ice maker tray 110 for actually forming ice with water supplied, the ejector 150 for removing the ice from the ice maker tray 110, a driver 160 for driving the ejector 150, and a slider 170 for guiding the ice removed from the ice maker tray 110 to the ice bucket 50.

For a method for freezing the ice maker 100, there may be an indirect freezing type that freezes water in the ice maker tray 110 by guiding cold air produced from the freezer room 20 to the ice maker 100 through a transfer duct, and a direct freezing type that freezes water in the ice maker tray 110 by directly providing cold air with an extra refrigerant pipe arranged in the ice maker tray 110.

In the case of direct freezing type, although not shown, the refrigerant pipe (not shown) may be installed under the ice maker tray 110 to directly come into contact with the ice maker tray 110 in the longitudinal direction of the ice maker tray 110.

The ice maker tray 110 may be made of a highly conductive material, such as aluminium. The ice maker tray 110 may include an ice maker space 120 for receiving water supplied and forming ice. The ice maker space 120 may be formed into a semicircular shape by a bottom part 121 with a cross-section in an arc form having a certain radius. Furthermore, the ice maker space 120 may be divided by a plurality of partition walls 122 protruding upright from the bottom part 121 into a plurality of unit ice maker spaces 120a, 120b. Among the plurality of unit ice maker spaces, however, only two of them are given reference numerals 120a, 120b for convenience of explanation.

A groove-shaped linkage part 124 for connecting neighboring unit ice maker spaces 120a, 120b is formed in the partition walls 122 such that water flowing in through a water supply hole 126 formed on one side of the ice maker tray 110 in the longitudinal direction is supplied to all the unit ice maker spaces 120a, 120b.

Furthermore, an anti-fallout wall 123 is formed on one side of the ice maker tray 110 in the direction of the width of the ice maker tray 110 to guide the ice formed in the ice maker space 120 to the slider 170 while preventing the ice from falling.

Ice units 300a, 300b formed in the unit ice maker spaces 120a, 120b are formed while being linked together by the linkage part 124, and the ice maker tray 110 of the refrigerator 1 in accordance with another embodiment of the present invention may further include a plurality of cutting ribs 127 to break the linkage. For convenience of explanation, some of the ice units are only given reference numerals 300a, 300b.

The cutting ribs 127 may be formed to protrude upright from the partition walls 122 and to be adjacent to the anti-fallout wall 123. Specifically, when the partition wall 122 located on the side of the anti-fallout wall 123 with respect to the linkage part 124 is called a first partition wall 122a, and the partition wall 122 located on the opposite side to the anti-fallout wall 123 with respect to the linkage part 124 is called a second partition wall 122b, the cutting ribs 127 may be formed to extend upward from the first partition wall 122a.

The cutting ribs 127 may break the linkage between the ice units 300a, 300b when the ejector 150 pushes the ice 300 up from the ice maker space 120 while rotating. Accordingly, they may prevent the ice, i.e., the ice units 300a, 300b from being stuck because of the linkage while the ice is being removed, and the ice units 300a, 300b may be removed from the right places without being interfered by one another.

The ice maker tray 110 including the bottom part 121, the anti-fallout wall 123, the plurality of partition walls 122, and the plurality of cutting ribs 127 may be integrally formed in a mold.

Furthermore, an ice removal heater 200 may be installed in the ice maker tray 110 for heating the ice maker tray 110 to facilitate removal of the ice 300 from the ice maker tray 110. The ice removal heater 200 will be described later in detail.

The ejector 150 to remove the ice 300 from the ice maker tray 110 may include the rotation shaft 151, and a plurality of ejector fins 152 protruding from the rotation shaft 151. The ejector fins 152 may remove the ice 300 from the ice maker space 120 while rotating around the rotation shaft 151.

On the front end of the ice maker tray 110 in the longitudinal direction, arranged is the driver 160 having electronic parts for providing turning force for the ejector 150 and controlling the ice making process including e.g., water supply, ice making, ice removing, transferring, etc.

The driver 160 may include a driver case 161 with the front open and internal space, a cover 163 for covering the open front of the driver case 161, and a driver module 162 detachably mounted in the internal space of the driver case 161.

In the driver module 162, an ice removal motor (not shown) for producing turning force to rotate the ejector 150, a circuit board (not shown) for controlling the ice making process, and an electric motion means, such as a gear for transferring the turning force from the ice removal motor to the ejector 150 are gathered together and accommodated in a case.

The ice removal heater 200 and an ice removal heater seat 130 will now be described in detail.

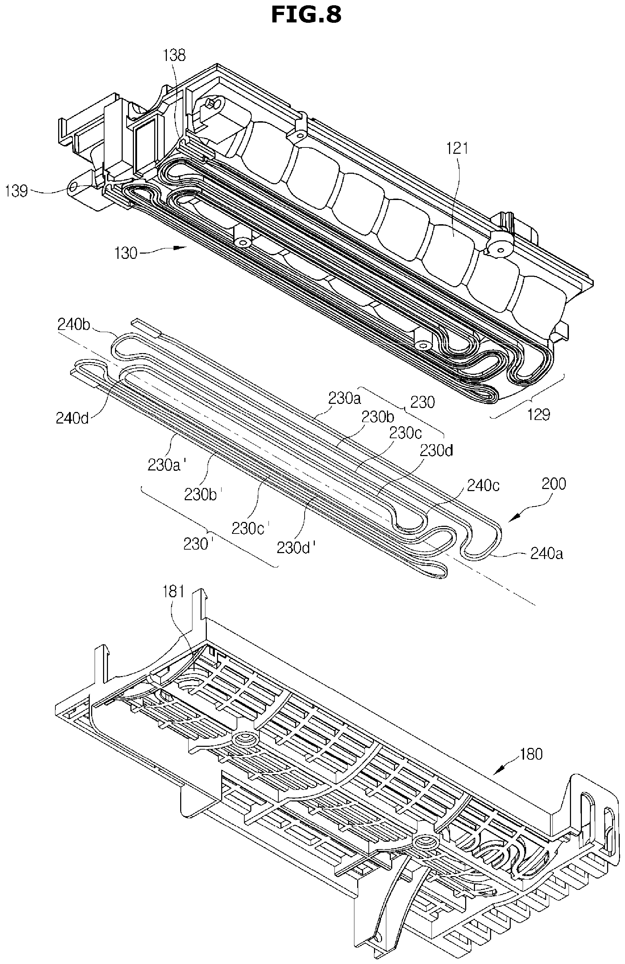

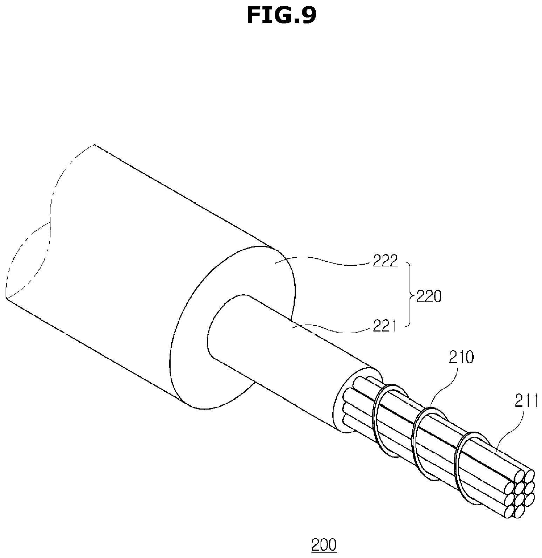

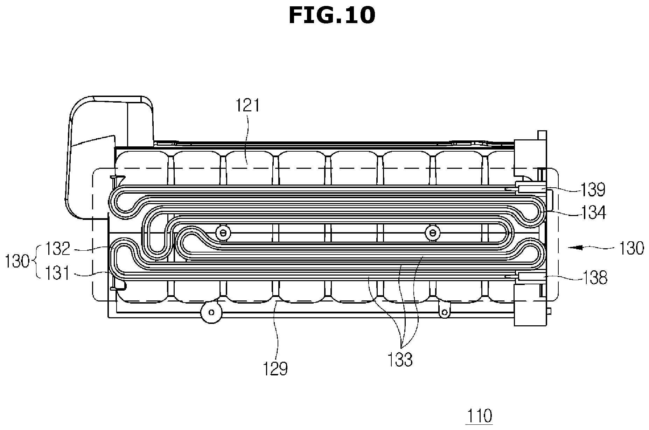

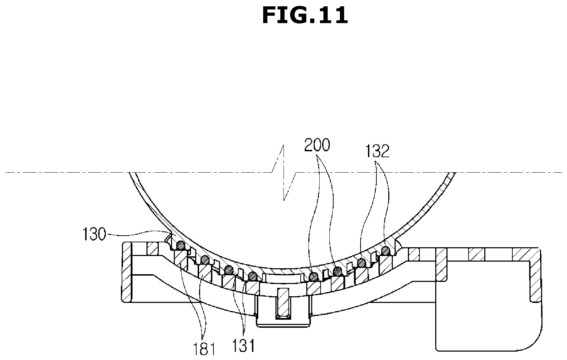

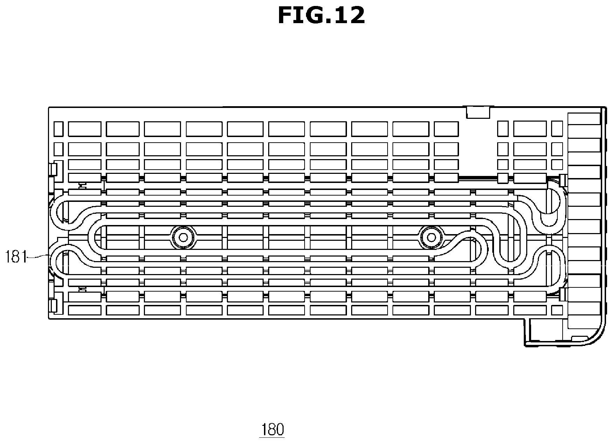

FIG. 8 is an exploded view of some components of an ice maker of a refrigerator, according to an embodiment of the present invention, FIG. 9 shows the inside of an ice removal heater of a refrigerator, according to an embodiment of the present invention, FIG. 10 is a rear view of an ice maker tray of a refrigerator, according to an embodiment of the present invention, FIG. 11 is a plan view of a supporting member of a refrigerator, according to an embodiment of the present invention, and FIG. 12 is a cross-sectional view of some components of an ice maker of a refrigerator, according to an embodiment of the present invention.

The ice removal heater 200 may be arranged along the outer circumferential surface of the bottom of the ice maker tray 110. The ice 300 is formed in the ice maker space 120 while contacting the bottom part 121 of the ice maker space 120, and the ice removal heater 200 is to melt a part of the ice 300 that contacts the bottom part 121 by heating the bottom part 121 before the ice 300 is removed, thereby facilitating removal of the ice 300.

The ice removal heater 200 may be implemented by a cord heater. As shown in FIG. 9, the cord heater 200 may include heating wires 210 heated when electricity applies and a heat-resistant part 220 for covering the heating wires 210.

The heating wires 210 may be arranged on the center axis of the ice removal heater 200 and made of a nickel chrome or copper nickel substance. The heating wires 210 may have a form that winds a bunch of heating wire fixing substances 211 and may be fixed inside the heat-resistant part 220. The heat-resistant part 220 may include a primary heat-resistant part 221 that directly covers the heating wires 210 and a secondary heat-resistant part 222 that covers the primary heat-resistant part 221. If the heating wires 210 make too much heat, the heat may be transferred to the ice maker tray 110 and may overly melt the ice 300 on one side before the ice 300 is removed.

Considering this, the heat to be produced by the heating wires 210 and transferred to the ice maker tray 110 may be limited to a certain level by doubly covering the heating wires 210 to resist some of the heat produced by the heating wires 210, thereby preventing too much ice from melting.

The primary heat-resistant part 221 may be made of a teflon substance to have heat-resistant temperatures of about 200 degrees. Since the primary heat-resistant part 221 directly contacts the heating wires 210, it may use a good heat-resistant material.

The secondary heat-resistant part 222 may be made of a Cross Linking-Polyethylene (XLPE) substance to have heat-resistant temperatures of about 125 degrees. The secondary heat-resistant part 222 may be an envelope of the ice removal heater 200, and in some embodiments, there may be additional envelope to cover the secondary heat-resistant part 222.

Heat-resistant performance of the primary heat-resistant part 221 may be better than that of the secondary heat-resistant part 222. As described above, since the primary heat-resistant part 221 directly comes into contact with the heating wires 210 and may receive a large amount of heat, it may be formed of a material having good heat-resistant performance.

The secondary heat-resistant part 222 may transfer the heat delivered from the primary heat-resistant part 221 to the ice maker tray 110. In this regard, to melt the ice by transferring a proper heat to the ice maker tray 110, the secondary heat-resistant part 222 may be formed of a material having lower heat-resistant performance than the primary heat-resistant part 221, thereby reducing an amount of heat to be transferred to the ice maker tray 110.

The ice removal heater 200 may be formed by double-pressing the heating wires 210 and the primary heat resistant part 221 and the secondary heat resistant part 222. Preferably, the ice removal heater 200 may be formed by pressing to have outside diameter of about 1.45 mm.

The shorter the outside diameter of the ice removal heater 200 is, the more effectively the heat produced by the heating wires 210 may be transferred to the ice maker tray 110. The ice removal heater 200 implemented by a cord heater may have short outside diameter than an aluminium pipe heater used for the conventional ice removal heater, so the heat transfer efficiency may increase.

Furthermore, the heat-resistant part 220 may be formed of a flexible substance to be arranged in the ice maker tray 110 in various forms even after the double pressing process.

The conventional ice removal heater uses an aluminum pipe heater with an envelope formed to be an aluminum pipe to heat the ice maker tray 110. The aluminum pipe heater may use heat wires made of a substance of iron chrome and a heat-resistant member formed of a substance of magnesium oxide MgO.

The envelope of the conventional aluminum pipe heater is formed to be an aluminum pipe with a certain outside diameter, because aluminum is easy to be processed.

The aluminum pipe may have outside diameter of about 8 mm, with heating wires made of a substance of iron chrome arranged in the middle of the aluminum pipe and magnesium oxides packed in between.

Due to the size of the outside diameter of the aluminum pipe, a thick heat-resistant section is formed from the heating wires to the envelope, which drops heat transfer efficiency of the aluminum pipe heater.

In an embodiment of the present invention, the ice removal heater 200 is implemented by a cord heater, and the outside diameter of the ice removal heater 200 is reduced. Accordingly, the ice removal heater 200 may transfer the heat produced by the heating wires 210 more effectively to the ice maker tray 110 than the conventional ice removal heater does.

Furthermore, the heat-resistant part 220 of the ice removal heater 200 implemented by a cord heater may be formed of a flexible substance to be arranged in the ice maker tray 110 in various forms even after the double pressing process.

Accordingly, the ice removal heater 200 may include many bending portions 240 that make it possible for the ice removal heater 200 to be modified to fit the size of the ice maker tray 110 and to be arranged while as large an area of the outer circumferential surface of the ice removal heater 200 as possible is in contact with the ice maker tray 100. This will be described in more detail later.

In the case of the conventional aluminum pipe heater, it is difficult to process the aluminum pipe into as many various forms as compared to the ice removal heater 200 in accordance with embodiments of the present invention.

It is because unlike the cord heater, the shape of the aluminum pipe heater may not be changed after the aluminum pipe heater is formed. Thus, the aluminum pipe heater may not be able to make additional bends to increase an area to contact the ice maker tray 110, so the area to contact the ice maker tray 110 may be smaller than that of the cord heater.

Accordingly, the ice removal heater 200 implemented by the cord heater has a larger heat transfer contact area that contacts the ice maker tray 110 than the ice removal heater 200 implemented by the conventional aluminum pipe heater does, thereby increasing heat transfer efficiency.

Furthermore, the ice removal heater 200 implemented by the cord heater may transfer a proper temperature heat to the ice maker tray 110 by virtue of the double structured heat-resistant part 220.

In the case of the conventional aluminum pipe heater, since the heat-resistant temperature of the aluminum, which is the material of the envelope, is high (e.g., the heat-resistant temperature of a heat-resistant aluminum alloy is 600 degrees or more) and the high heat is all transferred to the ice maker tray 110, the ice 300 formed in the ice maker tray 120 may be overly melted.

On the contrary, the ice removal heater 200 implemented by the cord heater transfers a lower temperature heat than that of the aluminum pipe heater, thereby preventing overly melting of the ice 300.

The conventional aluminum pipe heater with heating wires made of a substance of iron chrome consumes power of about 141W when a voltage of 120V or 230V for home is applied thereto, but the ice removal heater 200 implemented by a cord heater with heating wires 210 made of a substance of nickel chrome or copper nickel may consume 48W when the same voltage is applied thereto.

Accordingly, the ice removal heater 200 implemented by the cord heater may reduce power consumption more than the conventional aluminum pipe heater, thereby saving power of the refrigerator 1.

As shown in FIG. 10, the ice removal heater 200 may be arranged on the outer circumferential surface of the bottom of the ice maker tray 110. Specifically, the ice removal heater 200 may be arranged to border on the outer circumferential surface of the bottom part 121 for transferring heat produced from the ice removal heater 200 to melt a side of the ice 300 formed in the ice maker space 120.

Especially, the ice removal heater 200 may transfer the heat to a heated area 129 located on the bottom part 121, and as the temperature in the heated area 129 rises, a side of the ice 300 bordering on the heated area 129 may be melted.

The heated area 129 is an area that borders on at least one side of the entire ice 300 formed in the ice maker space 120, and may be formed in a part of the bottom part 121. Preferably, it may be sectionalized symmetrically from the center of the bottom part 121.

The heated area 129 is, however, not limited thereto, but may be sectionalized into various forms depending on the form of arrangement of the ice removal heater 200 and may include the entire area of the bottom part 121 that borders on the ice removal heater 200.

The ice removal heater 200 may include a plurality of longitudinal portions 230 extending in the direction corresponding to the longitudinal direction of the ice maker tray 110, and bending portions 240 connecting the plurality of longitudinal portions 230 (see FIG. 8).

The ice removal heater 200 may include a first elongate part 230a extending from a first point 138 on one side of the ice maker tray 110 to be adjacent to the other side of the ice maker tray 110 in the longitudinal direction of the ice maker tray 110.

The first elongate part 230a may be formed to be connected to an end of a first bending part 240a formed in an area adjacent to the other side of the ice maker tray 110. The first bending part 240a may have the form that bends from the end of the first elongate part 230a toward the center of the heated area 129.

The ice removal heater 200 may also include a second elongate part 230b extending from the other end of the first bending part 240a bending toward the center of the ice maker tray 110 to an area adjacent to the one side of the ice maker tray 110 in the longitudinal direction of the ice maker tray 110.

The second elongate part 230b may be formed to extend to an end of a second bending part 240b formed in an area adjacent to the one side of the ice maker tray 110. The second bending part 240b may have the form that bends from an end of the second elongate part 230b toward the center of the heated area 129.

In such a pattern the first and second longitudinal portions 230a, 230b and the first and second bending portions 240a, 240b form, the ice-removing heater 200 may further include third and fourth longitudinal portions 230c, 230d and third and fourth bending portions 240c, 240d formed toward the center of the heated area 129.

In this case, the fourth elongate part 230d may be arranged to be adjacent to the center of the heated area 129. Assuming an imaginary center line in the heated area 129 in the longitudinal direction, the first to fourth longitudinal portions 230 may be arranged on one side from the center line.

The fourth elongate part 230d may extend from the other end of the third bending part 240c to the fourth bending part 240d, and the ice removal heater 200 extending from the fourth bending part 240d may include fifth to eighth longitudinal portions 230a', 230b', 230c', and 230d' and fifth to eighth bending portions 240a', 240b', 240c', and 240d' formed on the other side from the center line in the same pattern that the first to fourth longitudinal portions 230a to 230d and first to fourth bending portions 240a to 240d form.

The fifth elongate part 230a' may extend to a second point 139 bordering on the one side of the ice maker tray 110 and being a distance away from the first point 238. In other words, the ice-removing heater 200 may include many longitudinal portions 230 and bending portions 240 to cover the most heated area 129 in order to form as large an area as possible to contact the heated area 129 between the first point 138 to the second point 139.

The ice removal heater 200 may include a single cable, coming into contact with the ice maker tray 110 on the bottom of the ice maker tray 110 while passing the first point 138 and running and bending to form the plurality of longitudinal portions 230, 230' and the plurality of bending portions 240, 240' and falling out of the bottom of the ice maker tray 110 through the second point 139.

The first and second points 138 and 139 may be located on the same side of the ice maker tray 110.

The first and second points 138 and 139 may be connected to wires (not shown) electrically connected to a control box (not shown) placed inside the main body 10 and outside of the ice maker tray 110.

The wires may connect the control box and the ice removal heater 200 while filling between insulations foamed between the inner case 11 and the outer case 12, and apply electricity to the heating wires 210 of the ice removal heater 200 to make the heating wires heated.

The plurality of bending portions 240 may each have the shape of an arc. Being in the shape of an arc, the bending portions 240 may connect the plurality of longitudinal portions 230 extending in the longitudinal direction of the ice maker tray 110.

Preferably, the curvature radius of the arc may be about 8mm. As the curvature radius of the arc remains about 8mm, the plurality of longitudinal portions may be arranged in the heated area 129.

The ice removal heater seat 130 may be formed on the outer circumferential surface of the bottom part 121 for the ice removal heater 200 to be settled in.

The ice removal heater seat 130 may include a seating projection 131 protruding outward from the outer circumferential surface of the bottom part 121 to correspond to the form in which the ice removal heater 200 is arranged, and a seating groove 132 sunken from the seating projection 131 for the ice removal heater 200 to tightly come into contact with the seating groove 132.

The seating projection 131 has the seating groove 132 sunken from it, and has the form corresponding to the ice removal heater 200. The seating projection 131 may thus include elongate part seats 133 and bending part seats 134 like the ice removal heater 200.

The seating groove 132 may be sunken from the center of the seating projection 131. The sunken groove 132 may be formed to correspond to the outside diameter of the ice removal heater 200, so the ice removal heater 200 may be tightly seated in the seating groove 132.

As shown in FIG. 12, about three quarters or more of the surface area of the outer circumferential surface of the ice removal heater 200 may be formed to come into contact with the seating groove 132. Since the ice removal heater 200 transfers heat to the outside through heat emission from the surface area, the larger an area that comes into contact with the surface area, the higher the heat transfer rate, thereby efficiently melting the ice 300.

In the case that the ice removal heater is implemented by the conventional aluminum pipe heater, the outside diameter of the aluminum pipe is too large for the ice removing hater seat 130 to have the form of a groove as in the embodiment of the present invention, but to have the form of a hook or clip.

The form of the hook or clip has a small area to come into contact with the surface area of the ice removal heater, so the heat produced from the surface area of the ice removal heater would not be sufficiently transferred to the ice maker tray 110.

The ice removal heater seat 130 in accordance with an embodiment of the present invention may keep the ice removal heater 200 settled in the seating groove 132 for about three quarters or more of the surface area of the ice removal heater 200 to directly contact the ice maker tray 110, thereby increasing the heat transfer efficiency.

Specifically, when the ice removal heater 200 is arranged on the bottom of the ice maker tray 110, the top part facing the ice maker tray 110, and left and right parts may be settled to come into contact with the sitting groove 132.

The ice removal heater seat 130 is not, however, limited thereto, but may also be formed to cover three quarters or more, or on the contrary, three quarters or less of the surface area of the ice removal heater 200.

However, considering that in terms of heat transfer efficiency, having more area of the ice removal heater seat coming into contact with the surface area of the ice removal heater 200 is advantageous to melt the ice, it is preferable that the ice removal heater seat 130 may be formed to come into contact with three quarters or more of the surface area of the ice removal heater 200.

The ice maker 100 may further include a supporting member 180 to support the bottom of the ice maker tray 110.

The supporting member 180 may fix the ice maker tray 110 by supporting the bottom of the ice maker tray 110. Specifically, the supporting member 180 may support the bottom of the ice maker tray 110 to fix the ice maker tray 10 onto the top of the ice bucket 50.

Referring to FIG. 11, the supporting member 180 may include an ice removal heater supporter 181. The ice removing supporter 181 may be in the form in which the ice removal heater 200 is arranged.

The ice removal heater supporter 181 may prevent the ice removal heater 200 from falling out of the ice removal heater seat 130 by supporting the bottom of the ice removal heater 200. Specifically, the ice removal heater 200 may be supported by the ice removal heater supporter 181 while having the top, left, and right parts of the ice removal heater 200 settled in the seating groove 132 as described above.

Furthermore, the ice removal heater supporter 181 may block the ice removal heater 200 from being exposed to the outside, thereby protecting the user from getting burned from the ice removal heater 200.

The supporter member 180 may be detachably mounted on the ice maker tray 110, without being limited thereto. Since the ice removal heater supporter 181 supports a side of the ice removal heater 200 as described above, it should be in the same form as the form of arrangement of the ice removal heater 200.

The ice removal heater seat 130 is not limited to the embodiment of the present invention, and the ice removal heater 200 may be settled in the ice removal heater seat 130 in many different ways other than the way in which the ice removal heater 200 is settled in the seating groove 132.

In some embodiments, the seating groove 132 may have a form that does not correspond to the form of arrangement of the ice removal heater 200. For example, a plurality of projections may be formed on the bottom part 121 of the ice maker tray 120 so as to make the bottom part 121 and surface area of the ice removal heater 200 come into contact as much as possible, and the ice removal heater 200 may be settled between the plurality of projections.

Furthermore, there is a hook extending from the bottom part 121 and having a length corresponding to the length of the elongate part 230. The ice removal heater seat 130 is not limited to what is described above, but may have various forms to settle the ice removal heater 200 in the ice maker tray 110.

Another embodiment of the ice removal heater 200 and ice removal heater seat 130' will now be described. Other features than the ice removal heater 200 and ice removal heater seat 130' as will be described below are the same as features in the aforementioned embodiment, so the description will be omitted.

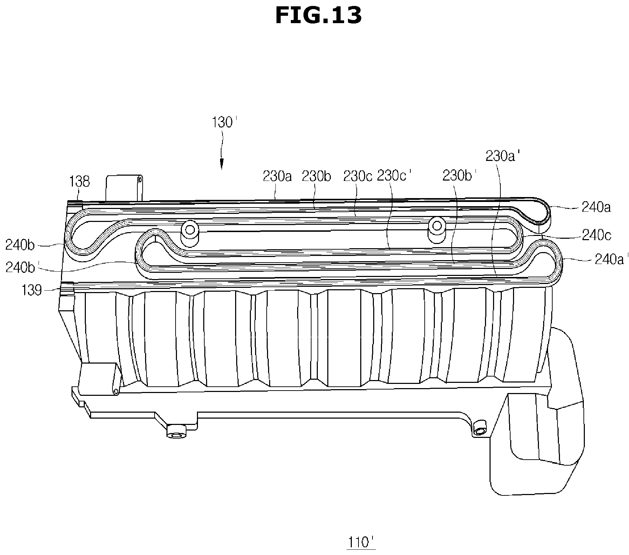

FIG. 13 is a rear perspective view of an ice maker tray of a refrigerator, according to another embodiment of the present invention.

The ice removal heater 200 may include three longitudinal portions each on either side from the center line of the heated area 129. It may further include a plurality of bending portions 240 corresponding to the longitudinal portions, including a third bending part 240c crossing the center line and connecting the symmetrical longitudinal portions 230c with respect to the center line.

Specifically, first, second, and third longitudinal portions 230a, 230b, and 230c may be arranged on one side of the center line of the heated area 129 to be gradually closer to the center line. On the other side of the center line, there may be fifth, sixth, and seventh longitudinal portions 230a', 230b', and 230c' arranged to correspond to the first, second, and third longitudinal portions 230a, 230b, and 230c on the one side of the heated area 129.

The ice removal heater 200 is not limited to what is described above, but may include less than three of, or four or more of longitudinal portions 230. It may include a plurality of bending portions 240 connecting the longitudinal portions 230, the number of the bending portions 240 depending on the number of the longitudinal portions 230.

Several embodiments have been described above, but a person of ordinary skill in the art will understand and appreciate that various modifications can be made without departing the scope of the present invention defined by the following claims.

## Claims

1. A refrigerator comprising:
an ice maker tray where ice is to be formed; and
a heater arranged on an outer side of the ice maker tray to heat the outer side of the ice maker tray to melt at least a part of the ice in the ice maker tray,
wherein the ice maker tray comprises a heater seat to settle the heater on the outer side of the ice maker tray, and
wherein the heater comprises a plurality of longitudinal portions formed in a direction corresponding to a longitudinal direction of the ice maker tray, and a plurality of bending portions arranged between the plurality of longitudinal portions.

2. The refrigerator of claim 1,
wherein at least a part of the longitudinal portions and bending portions of the heater are formed with a cord heater.

3. The refrigerator of claim 1,
wherein about three quarters of an outer circumferential surface of the heater comes into contact with the ice removal heater seat.

4. The refrigerator of claim 1,
wherein the plurality of longitudinal portions are three or more in number, and the plurality of bending portions are two or more in number.

5. The refrigerator of claim 1,
wherein the heater seat comprises
a seating projection protruding outward from the ice maker tray and a seating groove sunken down from the seating projection.

6. The refrigerator of claim 5,
wherein the seating groove has a width corresponding to an outer circumferential surface of the heater for the heater to be tightly settled in the seating groove.

7. The refrigerator of claim 5,
wherein the seating groove comes into contact with about three quarters of an outer circumferential surface of the ice removal heater.

8. The refrigerator of claim 1,
wherein an entire area of the plurality of longitudinal portions and bending portions of the heater is settled in the heater seat.

9. The refrigerator of claim 1,
wherein at least a portion of the bending portions of the heater is shaped like an arc, the arc having a curvature radius of about 8mm or less.

10. The refrigerator of claim 1,
further comprising a supporting member for supporting at least one side of the heater.

11. The refrigerator of claim 10,
wherein the supporting member comprises a supporter having a form that corresponds to the heater seat.

12. The refrigerator of claim 11,
wherein the supporter supports the at least one side of the heater that is not in contact with the heater seat.

13. The refrigerator of claim 2,
wherein the cord heater comprises
a heating wire;
a first heat-resistant part covering the heating wire; and
a second heat-resistant part covering the first heat-resistant part.

14. The refrigerator of claim 13,
wherein the first heat-resistant part has a higher heat-resistant performance than the second heat-resistant part.

15. The refrigerator of any one of the preceding claims,
wherein a diameter of an outer circumferential surface of the heater is less than about 1.45mm.
